# FASCICULE DE BREVET EUROPEEN

(11) **EP 2 179 165 B1**
(45) Date de publication et mention de la délivrance du brevet: **02.11.2011**
(21) Numéro de dépôt: 08830917.4
(22) Date de dépôt: 20.06.2008
(51) Int. Cl.: F02K 1/72

(54) **CAPOT MOBILE D'INVERSEUR DE POUSSEE ET INVERSEUR DE POUSSEE EQUIPE D'UN TEL CAPOT**
MOBILE SCHUBUMKEHRERHAUBE UND MIT EINER SOLCHEN HAUBE AUSGESTATTETER SCHUBUMKEHRER
MOBILE THRUST REVERSER COWL AND THRUST REVERSER PROVIDED WITH SUCH A COWL

(30) Priorité: 20.08.2007 FR 0705895
(43) Date de publication de la demande: 28.04.2010
(73) Titulaire: Aircelle, 76700 Gonfreville l'Orcher (FR)
(72) Inventeur: METEZEAU, Fabrice, F-76290 Montivilliers (FR); VALLEROY, Laurent, F-76600 Le Havre (FR)
(74) Mandataire: Gaillarde, Frédéric F. Ch.
(86) Numéro de dépôt international: PCT/FR2008/000862
(87) Numéro de publication internationale: WO 2009/034240

(56) Documents cités:
- WO-A-84/01344
- US-A- 5 927 647

## Description

La présente invention se rapporte à un capot mobile d'inverseur de poussée, et à un inverseur de poussée équipé d'un tel capot mobile.

On connaît de la technique antérieure (c.f. US-A-5 927 647) un capot mobile pour inverseur de poussée à grilles, comprenant :
- une paroi intérieure présentant une zone antérieure,
- au moins un volet monté articulé entre une position de jet direct dans laquelle ce volet est situé en vis-à-vis de ladite zone antérieure et une position de jet inversé dans laquelle ce volet est situé à l'écart de ladite zone antérieure, et
- au moins une bielle dont une extrémité est reliée audit volet afin de permettre son actionnement de l'une à l'autre desdites positions.

L'autre extrémité de la bielle est destinée à être reliée à la structure interne fixe de l'inverseur de poussée, et le passage de l'une à l'autre des positions du volet s'effectue sous l'effet du coulissement du capot mobile par rapport à la structure fixe de l'inverseur.

Lorsque le volet se trouve en position jet direct, l'extrémité de la bielle qui coopère avec le volet se trouve très proche de la zone antérieure de la paroi interne du capot mobile.

Cette contrainte de proximité est accrue dans les inverseurs de poussée destinés aux gros moteurs, pour lesquels on cherche à minimiser l'épaisseur radiale séparant le volet de la paroi extérieure du capot mobile.

Or, en cas de rupture d'une conduite du moteur lorsque l'inverseur de poussée se trouve en position jet direct, il se peut que la bielle subisse un certain déplacement vers l'extérieur, au risque de crever la paroi interne du capot mobile dans sa zone antérieure, et de conduire ainsi à des désordres inacceptables par rapport aux règles de sécurité en vigueur.

Un tel déplacement de bielle risque également de se produire dans des situations de navigation particulières, comme par exemple lorsque l'avion tourne en vol et que des différences de pression importantes apparaissent sur la périphérie de la zone externe des capots mobiles de l'inverseur de poussée.

La présente invention a notamment pour but de fournir un inverseur de poussée permettant de prévenir les risques de ruine inhérents aux déplacements relatifs radiaux anormaux de la bielle par rapport à la paroi antérieure interne du capot mobile.

On atteint ce but de l'invention avec un capot mobile pour inverseur de poussée à grilles, comprenant :
- une paroi intérieure présentant une zone antérieure,
- au moins un volet monté articulé entre une position de jet direct dans laquelle ce volet est situé en vis-à-vis de ladite zone antérieure et une position de jet inversé dans laquelle ce volet est situé à l'écart de ladite zone antérieure, et
- au moins une bielle dont une extrémité est reliée audit volet afin de permettre son actionnement de l'une à l'autre desdites positions,
   remarquable en ce que ladite paroi intérieure présente, dans ladite zone antérieure, une partie apte à permettre un déplacement de ladite extrémité de bielle au-delà de sa position normale sans ruine de ladite paroi intérieure, ladite partie étant fusible ou élastique.

La présence d'une telle partie permet de contrôler les effets d'une interférence de l'extrémité de la bielle avec la paroi intérieure du capot mobile dans le cas de déplacements anormaux de cette extrémité de bielle provoqués notamment par un éclatement de conduite du moteur ou par des différences de pression dans la veine d'air frais de l'inverseur de poussée.

En d'autres termes, on contient de manière locale les effets de ladite interférence, et l'on évite de la sorte que ces effets se propagent à l'ensemble du capot mobile et puissent avoir de graves conséquences sur le fonctionnement du moteur et donc de l'ensemble de l'avion.

Suivant d'autres caractéristiques de ce capot mobile :
- ladite partie est fusible : dans ce cas, l'extrémité de la bielle peut transpercer cette partie lorsque cette bielle se déplace radialement au-delà de sa position normale ;
- ladite partie est élastique : dans ce cas, cette partie se déplace sans se percer sous l'effet du déplacement de la bielle, ce qui permet d'éviter les fuites de l'air frais circulant dans la veine d'air frais ;
- ladite partie est bombée vers l'extérieur dudit capot mobile : cette forme bombée permet de faire empiéter l'extrémité de la bielle sur le volume délimité par la zone antérieure de la paroi interne du capot mobile en situation de fonctionnement normal, et ainsi de réduire l'épaisseur radiale de l'ensemble formé par le capot mobile et son volet ;
- un jeu radial est prévu entre ladite extrémité de bielle et ladite partie : ce jeu permet d'éviter les interférences entre l'extrémité de la bielle et cette partie en situation de fonctionnement normal.

La présente invention se rapporte également à un inverseur de poussée à grilles, remarquable en ce qu'il comprend un capot mobile conforme à ce qui précède.

Suivant une caractéristique optionnelle, cet inverseur de poussée comporte un jeu radial entre ladite partie et le cadre arrière desdites grilles : ce jeu permet d'éviter que cette partie vienne buter contre le cadre arrière de ces grilles lorsque ce capot mobile coulisse vers sa position d'ouverture.

D'autres caractéristiques et avantages de l'invention apparaîtront à la lumière de la description qui va suivre et à l'examen des figures ci-annexées dans lesquelles :
- la figure 1 représente en coupe axiale un inverseur de poussée selon l'invention en position jet direct, et
- la figure 2 représente une vue de détail de la zone II de la figure 1.

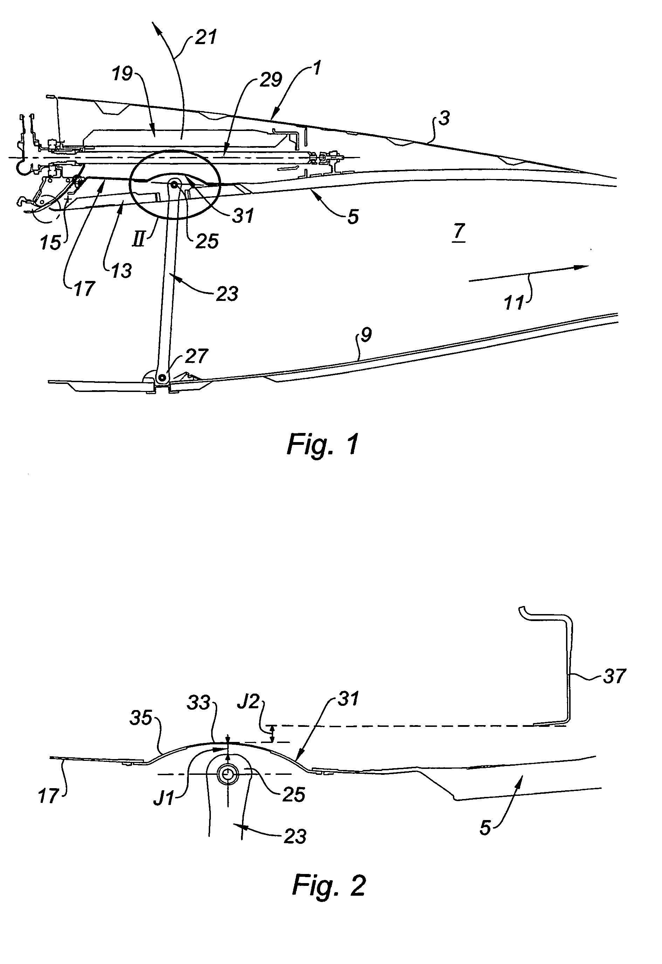

En se reportant à la figure 1, on voit que l'inverseur de poussée selon l'invention comprend un capot mobile 1 comportant une paroi extérieure 3 et une paroi intérieure 5.

La paroi intérieure 5 définit une veine d'air froid 7 avec une paroi intérieure fixe 9.

En fonctionnement en jet direct, l'air frais circule à l'intérieur de la veine 7 selon la direction de la flèche 11.

Comme cela est connu en soi, un volet 13 est monté articulé sur le capot mobile 1 autour d'un axe 15 entre un position de jet direct visible sur la figure 1, dans laquelle ce volet 13 se trouve en vis-à-vis d'une zone antérieure 17 de la paroi intérieure 5 du capot mobile 1, et une position de jet inversé (non représentée), dans laquelle ce volet obstrue la veine d'air frais 7, permettant la déviation de l'air frais à travers les grilles 19 de l'inverseur de poussée, selon la direction indiquée par la flèche 21.

Le passage du volet 13 de sa position jet direct à sa position jet inversé s'effectue sous l'effet d'au moins une bielle 23 dont une extrémité 25 est montée articulée sur ce volet et l'autre extrémité 27 est montée articulée sur la structure interne fixe 9.

L'effort de traction exercé par la bielle 23 sur le volet 13 de manière à faire passer ce dernier de sa position jet direct à sa position jet inversé, est provoqué par le coulissement du capot mobile 3 sous l'effet d'au moins un vérin 29, de sa position visible sur la figure 1 à une position déplacée vers la droite de la figure, dans laquelle ce capot mobile découvre les grilles 19, permettant la sortie du jet d'air frais inversé 21.

Comme cela est particulièrement visible sur la figure 2, on remarque que la zone antérieure 17 de la paroi intérieure 5 du capot mobile 1 comporte une partie 31 bombée en direction de l'extérieur de l'inverseur de poussée, c'est-à-dire vers le haut de la feuille de dessins ci-annexés.

Cette partie bombée 31 est obtenue par formation d'un orifice dans la paroi de la zone antérieure 17 et par obstruction de cet orifice par apport d'une pièce bombée.

Cette pièce bombée peut être formée dans le même matériau que le reste de la paroi formant la zone antérieure 17, ou bien dans un matériau différent.

Selon une première option, la partie bombée 31 peut être formée dans un matériau fusible, c'est-à-dire dans un matériau apte à céder sous la pression exercée par l'extrémité 25 de la bielle 23 lors du déplacement de cette bielle vers l'extérieur de l'inverseur de poussée à partir de sa positon représentée sur la figure 1.

Une manière de réaliser une telle pièce fusible est de prévoir que la partie centrale 33 de cette pièce présente une sous-épaisseur par rapport à sa partie périphérique 35.

Selon une autre option, on peut envisager que la pièce 31 soit formée dans un matériau élastique, c'est-à-dire dans un matériau qui ne cède pas sous l'effet d'un déplacement radial vers l'extérieur de la bielle 23.

Dans le cas où la partie bombée 31 est fusible, elle peut être formée par exemple en alliage de métal ou en matériau composite.

Dans le cas où cette partie bombée est élastique, elle peut être formée par exemple dans un polymère approprié.

Bien entendu, on prévoit un jeu radial J1 ente l'extrémité 25 de la bielle 23 et le fond de la partie bombée 31, de manière qu'en mode de fonctionnement normal, cette extrémité de bielle n'interfère pas avec cette partie bombée 31.

On prévoit également un jeu radial J2 entre le fond de la partie bombée 31 et le cadre arrière 37 des grilles 19, de manière que lors du coulissement du capot mobile 1 de sa position jet direct vers sa position jet inversé, cette partie 31 n'interfère pas avec ce cadre arrière de grilles.

Les avantages de l'inverseur de poussée qui vient d'être décrit découlent immédiatement des considérations précédentes.

Le fait de prévoir une partie fusible ou élastique 31 permet, en cas de déplacement radial d'amplitude anormale de la bielle 23 vers l'extérieur de l'inverseur de poussée dans une configuration de jet direct telle que représentée sur la figure 1, que cette bielle vienne transpercer la partie 31 (lorsque que cette partie est fusible) ou déplacer cette partie 31 vers l'extérieur de l'inverseur de poussée (lorsque cette partie 31 est élastique), sans entraîner la ruine de la paroi formant la zone intérieure 17 du capot mobile 1.

En d'autres termes, on autorise une destruction ou une déformation localisée de cette paroi, ce qui permet d'éviter la ruine complète de la paroi intérieure 5 du capot mobile, voire de l'ensemble de ce capot mobile et par la suite de l'inverseur de poussée.

Bien entendu, la présente invention n'est nullement limitée aux modes de réalisation décrit et représenté, fournis à tire de simple exemple.

C'est ainsi par exemple qu'en lieu et place d'une partie bombée 31, on pourrait prévoir un simple couvercle s'étendant sensiblement dans le plan de la paroi de la zone antérieure 17.

Il faut noter toutefois que cette option serait moins avantageuse que celle qui a été décrite précédemment.

En effet, l'option précédente permet, du fait de l'empiètement de la bielle 23 sur l'espace délimité par la paroi de la zone intérieure 17, d'obtenir une plus faible épaisseur radiale globale du capot mobile 1 et de son volet 13, ce qui est particulièrement favorable pour les inverseurs de poussée destinés à de gros moteurs pour lesquels l'encombrement radial est une donnée critique.

## Revendications

1. Capot mobile (1) pour inverseur de poussée à grilles (19), comprenant :
- une paroi intérieure (5) présentant une zone antérieure (17),
- au moins un volet (13) monté articulé entre une position de jet direct (11) dans laquelle ce volet (13) est situé en vis-à-vis de ladite zone antérieure (17) et une position de jet inversé (21) dans laquelle ce volet est situé à l'écart de ladite zone antérieure (17), et
- au moins une bielle (23) dont une extrémité (25) est reliée audit volet (13) afin de permettre son actionnement de l'une à l'autre desdites positions,
**caractérisé en ce que** ladite paroi intérieure (5) présente, dans ladite zone antérieure (17), une partie (31) apte à permettre un déplacement de ladite extrémité de bielle (25) au-delà de sa position normale sans ruine de ladite paroi intérieure (5), cette partie (31) étant sélectionnée dans le groupe comprenant une partie fusible et une partie élastique.

2. Capot (1) selon la revendication 1, **caractérisé en ce que** ladite partie (31) est bombée vers l'extérieur dudit capot mobile (1).

3. Capot (1) selon la revendication 2, **caractérisé en ce qu'**un jeu radial (J1) est prévu entre ladite extrémité de bielle (25) et ladite partie (31).

4. Inverseur de poussée à grilles (29), **caractérisé en ce qu'**il comprend un capot mobile (1) conforme à l'une quelconque des revendications précédentes.

5. Inverseur de poussée selon la revendication 4, **caractérisé en ce qu'**il comporte un jeu radial (J2) entre ladite partie (31) et le cadre arrière (37) desdites grilles (19).

## Claims

1. A mobile cowl (1) for a cascade thrust reverser (19), comprising:
- an internal wall (5) with a front section (17),
- at least one flap (13) mounted so as to pivot between a direct jet position (11), in which said flap (13) is situated opposite said front section (17), and a reversed jet position (21), in which said flap is situated away from said front section (17), and
- at least one connecting rod (23), one end (25) of which is connected to said flap (13) so as to allow it to be actuated from one to the other of said positions,
**characterized in that** said internal wall (5) has, in said front section (17), a part (31) able to allow said connecting rod end (25) to move beyond its normal position without ruining said internal wall (5), said part (31) being chosen from the group comprising a fusible part and an elastic part.

2. The cowl (1) according to claim 1, **characterized in that** said part (31) is domed to the outside of said mobile cowl (1).

3. The cowl (1) according to claim 2, **characterized in that** radial play (J1) is provided between said connecting rod end (25) and said part (31).

4. A cascade thrust reverser (29), **characterized in that** it comprises a mobile cowl (1) according to any one of the preceding claims.

5. The cascade thrust reverser according to claim 4, **characterized in that** it has radial play (J2) between said part (31) and the rear frame (37) of said grids (19).

## Patentansprüche

1. Bewegbare Haube (1) für Schubumkehr mit Gittern (19), die umfasst:
- eine Innenwand (5), die eine vordere Zone (17) aufweist,
- mindestens eine Klappe (13), die angelenkt zwischen einer Direktstrahlstellung (11), in der sich diese Klappe (13) gegenüber der vorderen Zone (17) befindet, und einer Umkehrstrahlstellung (21), in der sich diese Klappe entfernt von der vorderen Zone (17) befindet, montiert ist, und
- mindestens eine Pleuelstange (23), von der ein Ende (25) mit der Klappe (13) verbunden ist, um ihre Betätigung von der einen in die andere Stellung zu erlauben,
**dadurch gekennzeichnet, dass** die Innenwand (5) in der vorderen Zone (17) einen Abschnitt (31) aufweist, der imstande ist, eine Verschiebung des Pleuelstangenendes (25) jenseits seiner normalen Stellung ohne Beschädigung der Innenwand (5) zu erlauben, wobei dieser Abschnitt (31) aus der Gruppe ausgewählt ist, die einen nachgebenden Abschnitt und einen elastischen Abschnitt umfasst.

2. Haube (1) nach einem der vorangehenden Ansprüche, **dadurch gekennzeichnet, dass** der Abschnitt (31) nach außen der bewegbaren Haube (1) gewölbt ist.

3. Haube (1) nach Anspruch 2, **dadurch gekennzeichnet, dass** zwischen dem Pleuelstangenende (25) und dem Abschnitt (31) ein radiales Spiel (J1) vorgesehen ist.

4. Schubumkehr mit Gittern (29), **dadurch gekennzeichnet, dass** sie eine bewegbare Haube (1) nach einem der vorangehenden Ansprüche umfasst.

5. Schubumkehr nach Anspruch 4, **dadurch gekennzeichnet, dass** sie ein radiales Spiel (J2) zwischen dem Abschnitt (31) und dem hinteren Rahmen (37) der Gitter (19) aufweist.
